# EUROPÄISCHE PATENTANMELDUNG

(11) **EP 3 968 425 A2**
(43) Veröffentlichungstag der Anmeldung: **16.03.2022**
(21) Anmeldenummer: 21196561.1
(22) Anmeldetag: 14.09.2021
(51) Int. Cl.: H01M 10/04, H01M 10/0585

(54) **VERFAHREN UND VORRICHTUNG ZUR HERSTELLUNG EINES ZELLSTAPELS FÜR BATTERIEZELLEN**

(30) Priorität: 15.09.2020 DE 102020124038
(71) Anmelder: VOLKSWAGEN AG, 38440 Wolfsburg (DE)
(72) Erfinder: Jamadar, Kartik, 38442 Wolfsburg (DE); Theuerkauf, Christian, 38114 Braunschweig (DE)
(74) Vertreter: karo IP

(57) **Zusammenfassung**

Die vorliegende Erfindung betrifft ein Verfahren zur Herstellung eines Zellstapels (57) für Batteriezellen (8), das wenigsten die folgenden Schritte aufweist:
a) Zuführen wenigstens einer ersten Werkstoffbahn (3), bestehend aus einem ersten Werkstoff;
b) Ausführen eines ersten Zuschnitts an wenigstens der ersten Werkstoffbahn (3) unter Ausbildung wenigstens eines zugfesten Transportabschnitts (18);
c) Zusammenführen der ersten Werkstoffbahn (3) mit wenigstens einer zweiten Werkstoffbahn (22), bestehend aus einem zweiten Werkstoff, zu einem Teilstapel (31);
d) Ausführen eines zweiten Zuschnitts des Teilstapels (31), wobei der Transportabschnitt (18) aufgetrennt wird;
e) Anordnen von wenigstens zwei Teilstapeln (31) zu einem Zellstapel (57).

## Beschreibung

Die vorliegende Erfindung betrifft ein Verfahren und eine Vorrichtung zur Herstellung eines Zellstapels für Batteriezellen.

Im Stand der Technik ist es bekannt Zellstapel für Batteriezellen herzustellen, indem Einzelanlagen für das Vereinzeln von Kathoden-, Anoden- und Separatorblättern verwendet werden. Die auf diese Weise hergestellten Blätter werden dann jeweils einzelnen und getrennt in Magazinen angeliefert und beim Einzelblattstapeln während der Bildung des Stapels einzeln positioniert und ausgerichtet. Dieser Prozess der Herstellung eines Zellstapels benötigt sehr hohe Taktzeiten.

Eine weitere bekannte Methode stellt das sogenannte Z-Falten dar, bei dem ein Separatorblatt um einzelne Elektrodenblätter gewickelt wird, die jedoch ebenfalls in einem vorgelagerten Prozessschritt zuvor vereinzelt und positioniert werden müssen. Auch das Z-Falten ermöglicht nur relativ langsame Taktzeiten.

Weiterhin ist es bekannt eine Stapelbildung mittels eines Laminationsprozesses vorzunehmen. Dazu ist es jedoch erforderlich die Kathodenblätter und die Anodenblätter mit Separatorfolien zu laminieren. Die dafür benötigen laminierfähigen Separatorfolien sind jedoch relativ teuer.

Die bislang bekannten Konzepte haben unterschiedliche Nachteile. So stellt die Zellstapelbildung aktuell einen sehr langsamen Prozess bei der Produktion von Batteriezellen dar. Auch die Einhaltung der erforderlichen Positionstoleranzen ist im Stapelbildungsprozess bei kurzen Taktzeiten aktuell nur äußerst schwierig zu realisieren. Zudem sind mit der getrennten Vorbereitung von Einzelblättern für den Zellstapel, dem anschließenden Magazinieren, dem Zusammenführen, dem Stapeln und dem Verbinden eine Reihe von Prozessschritten erforderlich, die jeweils ein aufwändiges Handling des Materials erfordern. Die Vielzahl von Prozessschritten erfordert zudem einen größeren anlagentechnischen Aufwand und es können nur relativ langsame Taktzeiten erreicht werden.

Aufgabe der vorliegenden Erfindung ist es daher, die sich aus dem Stand der Technik ergebenden Probleme zumindest teilweise zu lösen. Insbesondere sollen ein Verfahren und eine Vorrichtung angegeben werden, mit denen ein Zellstapel für Batteriezellen besonders schnell hergestellt werden kann. Zudem soll die Positionsgenauigkeit der verwendeten Werkstoffbahnen verbessert und der anlagentechnische Aufwand reduziert werden.

Zur Lösung dieser Aufgaben trägt ein Verfahren mit den Merkmalen gemäß Patentanspruch 1 bei. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und/oder Details aus den Figuren ergänzt werden, wobei weitere Ausführungsvarianten der Erfindung aufgezeigt werden.

Vorliegend wird ein Verfahren zur Herstellung eines Zellstapels für Batteriezellen vorgeschlage, das wenigsten die folgenden Schritte aufweist:
a) Zuführen wenigstens einer ersten Werkstoffbahn, bestehend aus einem ersten Werkstoff;
b) Ausführen eines ersten Zuschnitts an wenigstens der ersten Werkstoffbahn unter Ausbildung wenigstens eines zugfesten Transportabschnitts;
c) Zusammenführen der ersten Werkstoffbahn mit wenigstens einer zweiten Werkstoffbahn, bestehend aus einem zweiten Werkstoff, zu einem Teilstapel;
d) Ausführen eines zweiten Zuschnitts des Teilstapels, wobei der Transportabschnitt aufgetrennt wird;
e) Anordnen von wenigstens zwei Teilstapeln zu einem Zellstapel.

Die Schritte a) bis e) können wenigstens einmal in der hier angegebenen Reichenfolge a), b), c), d) und e) durchgeführt werden. Es ist möglich, dass diese Schritte unterschiedlich oft und/oder zumindest teilweise zeitlich überlagernd durchgeführt werden.

Hierbei wird zunächst mindestens eine Werkstoffbahn einem ersten Werkstoff zugeführt. Die Werkstoffbahn kann beispielsweise für die Anwendung als Anode, Kathode oder Separator einer Batteriezelle gewählt werden. Hierbei bieten sich für die Anode etwa ein Substrat aus einem kupferhaltigen Material und eine darauf aufgebrachte Anodenaktivschicht an. Entsprechend ist beispielsweise ein aluminiumhaltiger Werkstoff als Substrat für eine darauf aufgebrachte Kathodenaktivschicht geeignet. Für Separatoren kommen beispielsweise flexible mikroporöse Kunststoffe oder Vliese in Betracht.

Die Werkstoffbahnen können vorzugsweise Vorratseinrichtungen, wie etwa Spulen bzw. Coils, mit großen Bahnlängen zugeführt werden, so dass über einen langen Zeitraum ein kontinuierlicher unterbrechungsfreier Betrieb des Verfahrens möglich ist.

Führt man beispielsweise eine erste Werkstoffbahn zu, die für die Herstellung einer Anode geeignet ist, kann diese Bahn an einer ersten Schneidvorrichtung einem ersten Zuschnitt unterzogen werden, wobei der Zuschnitt so erfolgt, dass wenigstens ein zugfester Transportabschnitt verbleibt. Der Transportabschnitt soll dabei so ausgebildet sein, dass er Zugkräfte in einer Längsrichtung der Werkstoffbahn aufnehmen kann. Dies erlaubt es, die Werkstoffbahn in den folgenden Schritten als eine durchgehende Werkstoffbahn zu verarbeiten, da die zum Weitertransport erforderlichen Kräfte in den Transportabschnitt eingeleitet werden können.

Bei einer besonders einfachen Ausführungsform der Erfindung wird die so zugeschnittene erste Werkstoffbahn dann einfach mit einer zweiten Werkstoffbahn, wie etwa einem Separator zu einem Teilstapel zusammengeführt. Insbesondere ist auch die zweite Werkstoffbahn des Separators in einer Vorratseinrichtung etwa als Separatorcoil vorgehalten, so dass der Prozess des ersten Zuschnitts und das Zusammenführen der ersten und zweiten Werkstoffbahn mit hoher Geschwindigkeit erfolgen kann.

Nach dem Zusammenführen wird der Teilstapel dann einem zweiten Zuschnitt zugeführt, wozu wieder der Transportabschnitt als Angriffspunkt für Antriebskräfte dient.

An einer zweiten Schneidvorrichtung kann danach der zweite Zuschnitt des Teilstapels erfolgen, wobei der Transportabschnitt vom Teilstapel abgetrennt und eine Teilung des Teilstapels in transversaler Richtung zur Bewegungsrichtung des Teilstapels eine Trennung erfolgt.
Der so erzeugte und abgetrennte zweischichtige Teilstapel weist dann eine Anode und einen Separator auf. Diese Teilstapel können dann zu einem Zellstapel angeordnet werden.

Insbesondere kann vorgesehen werden, dass die erste Werkstoffbahn und die zweite Werkstoffbahn auf unterschiedliche Abmessungen zugeschnitten werden. Für die Sicherheit von Batteriezellen ist es erforderlich, dass Separatoren in alle Richtungen und in einem ausreichenden Maß über die zu isolierenden Anoden bzw. Kathoden hinausragen, um einen Stromfluß zwischen diesen beiden Werkstoffbahnen sicher zu vermeiden. Hierbei soll ein Übermaß des Separators über eine Kathode ca. 3 mm und über eine Anode ca. 1,5 mm umlaufend betragen. Dies bedeutet, dass der Separator ca. 6 mm größer als die Kathode und ca. 3 mm größer als die Anode sein sollte.

Diese unterschiedlichen Größen können vorzugsweise bereits im Rahmen des ersten Zuschnitts mittels ersten Schneidvorrichtungen erzeugt werden, die für jede Werkstoffbahn einen individuellen Zuschnitt ausführen. Hierzu wird beispielsweise die Kathode auf die gewünschte Breite zuzüglich der Breite des erforderlichen Transportabschnitts zugeschnitten. Gleichzeitig wird die Anode auf die gewünschte Breite zuzüglich eines Übermaßes von 3mm und zuzüglich der Breite des Transportabschnitts zugeschnitten. Schließlich wird der Separator auf die gewünschte Breite zuzüglich eines Übermaßes von 6mm zugeschnitten. Hierbei ist anzumerken, dass in allen drei Werkstoffbahnen bereits auch transversale Schnitte eingebracht werden können. Wichtig ist nur, dass hierbei stets mindestens ein Transportabschnitt beibehalten wird, der dazu geeignet ist in longitudinaler Richtung der Werkstoffbahnen wirkende Zugkräfte aufzunehmen und weiterzuleiten. Richtet man nun die Werkstoffbahnen seitlich entsprechend zueinander aus, können diese zusammengeführt und der zweiten Schneidvorrichtung zum zweiten Zuschnitt zugeführt werden, um danach vereinzelte Teilstapel zu erhalten, die aufeinandergestapelt werden können.

Besonders vorteilhaft kann beim Zuschnitt ein Transporteingriffsmittel oder ein Fensterabschnitt in der Werkstoffbahn, insbesondere im Transportabschnitt, geschaffen wird. Dies geschieht vorzugsweise bereits beim ersten Zuschnitt, indem beispielsweise kleine Fenster oder Lochungen in die Werkstoffbahn eingebracht werden, an denen zum Weitertransport eingesetzte Antriebe mit Stifte, Antriebräder oder ähnlichem eingreifen können.

Insbesondere können die Teilstapel aus wenigstens vier Werkstoffbahnen gebildet werden. Hierbei ist vor allem die Kombination von Werkstoffbahnen in Form von zwei Elektroden und zwei Separatoren vorteilhaft. Bildet man aus diesen Werkstoffbahnen möglichen Kombinationen, so können die daraus hergestellten Teilstapel bis zu der benötigten Höhe des Zellstapels übereinander angeordnet werden, wo es lediglich erforderlich ist als erste oder als letzte Werkstoffbahn einen Separator hinzuzufügen.

Wählt man beispielsweise die Kombination aus übereinander angeordneter Anode, Separator, Kathode, Separator, so muss zu Beginn des Anordnens des Teilstapels ein einzelner Separator eingelegt werden, da ansonsten die untenliegende Anode nicht isoliert wäre.

Wählt man hingegen die Kombination aus übereinander angeordnetem Separator Anode, Separator, Kathode, so muss zum Ende des Anordnens des Teilstapels ein einzelner Separator aufgelegt werden, da ansonsten die obenliegende Kathode nicht isoliert wäre.

Insbesondere können beim Zuschnitt bereits an wenigstens zwei Werkstoffbahnen Ableiterfähnchen ausgebildet werden. Dies bietet sich vor allem bei den Werkstoffbahnen der Anoden und Kathoden an. Hierbei ist es möglich die Ableiter im ersten und zweiten Zuschnitt bereits vollständig und ohne zusätzlichen Aufwand auszubilden, indem lediglich eine entsprechende und geeignete Schnittkontur gewählt wird.

Insbesondere kann der nach dem vorliegenden Verfahren hergestellte Zellstapel in einem sich unmittelbar anschließenden Verfahrensschritt mit einem Verbindungsmittel, wie etwa einem Tape bzw. Klebeband zu einem Zellpaket verbunden wird. Dieser zusätzliche Schritt lässt sich besonders leicht an das vorliegende Verfahren anschließen.

Für das automatische Anordnen ist es insbesondere vorteilhaft, wenn beim Anordnen der Teilpakete zum Zellstapel zumindest eine zusätzliche Werkstoffbahn im Zellstapel angeordnet wird. Wie bereits zuvor beschrieben, kann diese Werkstoffbahn entweder an der Unterseite des Zellpakets und damit am Beginn des Anordnens der Teilstapel oder an der Oberseite des Zellpakets und damit am Ende des Anordnens der Teilstapel in den Zellstapel eingebracht werden.

Eine Batteriezelle mit einem Zellstapel, hergestellt nach einem der vorhergehenden Patentansprüche hat den Vorteil, dass diese kostengünstig hergestellt werden kann und einzelnen Werkstoffbahnen aufgrund der automatisierten und kontinuierlichen Verarbeitung besonders positionsgenau zueinander angeordnet sind. Dies senkt die Kosten und erhöht die Lebensdauer bzw. Zuverlässigkeit der Batteriezelle.

Insbesondere gilt diese auch für ein Kraftfahrzeug mit wenigstens einer Batteriezelle nach dem vorhergehenden Patentanspruch.

Die weiterhin von der Erfindung vorgeschlagene Vorrichtung zur Herstellung eines Zellstapels weist wenigstens zwei Vorratseinrichtungen für wenigstens eine erste Werkstoffbahn und eine zweite Werkstoffbahn, wenigstens eine erste Schneidvorrichtung und eine zweite Schneidvorrichtung zum Zuschneiden des Werkstoffs auf, sowie eine Transportvorrichtung zur Förderung der Werkstoffbahnen, eine Einrichtung zum Zusammenführen der Werkstoffbahnen, und eine Stapelvorrichtung, wobei die erste Schneidvorrichtung wenigstens einen zugfesten streifenförmigen Transportabschnitt erzeugt, die zweite Schneidvorrichtung in einer Längsrichtung hinter der Einrichtung zum Zusammenführen der Werkstoffbahnen angeordnet und dazu ausgebildet ist, eine vollständige transversale Trennung der Werkstoffbahnen zu erzeugen. Der Transportabschnitt ist in Längsrichtung gesehen vorzugsweise am äußeren Rand der Werkstoffbahn ausgebildet und weist eine Breite von weniger als 25% der Breite der Werkstoffbahn auf. In der Praxis können bereits Breiten im Bereich von 2 mm - 30 mm vollkommen ausreichend sein. Sind mehrere Transportabschnitte an unterschiedlichen Werkstoffbahnen vorgesehen, so können diese transversal zur Längsrichtung zueinander versetzt angeordnet werden, so dass beispielsweise Antriebseinrichtungen unabhängig voneinander an diesen Transportabschnitten in Eingriff gebracht werden können. Alternativ kann eine Antriebseinrichtung auch gleichzeitig mit mehreren Transportabschnitten in Eingriff stehen und somit einen synchronen Transport von mehreren Werkstoffbahnen gewährleisten.

Insbesondere kann die erste Schneidvorrichtung zum parallelen Zuschnitt von wenigstens zwei Werkstoffbahnen ausgebildet sein.

Zudem kann vorgesehen werden, dass die erste Schneidvorrichtung dazu ausgebildet ist, wenigstens eine Werkstoffbahn parallel zur Längsrichtung in eine Mehrzahl von Werkstoffbahnen aufzutrennen. Hierdurch ist es möglich auch breitere Werkstoffbahnen beispielsweise in der ersten Schneidvorrichtung zu verarbeiten. Hierbei wird vorzugsweise zunächst der gewünschte erste Zuschnitt ausgeführt und dann die Werkstoffbahn auf die benötigte Breite aufgeteilt. So können beispielsweise Werkstoffbahnen für Separatoren zugeschnitten werden, die die doppelte Breite des benötigten Separators aufweisen. Teilt man diese breite Werkstoffbahn im ersten Zuschnitt nun auf zwei Werkstoffbahnen von Separatoren auf, können diese beiden Werkstoffbahnen beispielsweise sofort im Rahmen eines Teilstapels mit zwei Elektroden und zwei Separatoren unterbrechungsfrei und fortlaufend weiterverarbeitet werden.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:
Fig.1: eine seitliche Schnittansicht einer ersten Schneidvorrichtung für eine Anode;
Fig. 2: eine Draufsicht auf die Schneidvorrichtung nach Figur 1;
Fig. 3: eine Draufsicht auf eine Anode nach dem ersten Zuschnitt;
Fig. 4: eine Draufsicht auf eine Kathode nach dem ersten Zuschnitt;
Fig. 5: eine seitliche Schnittansicht einer ersten Schneidvorrichtung für einen Separator;
Fig. 6: eine Draufsicht auf zwei mögliche Zuschnitte für einen Separator;
Fig. 7: eine mögliche Kombination von vier Werkstoffbahnen;
Fig. 8: eine Seitenansicht des Prozesses ab dem Zusammenführen der Werkstoffbahnen;
Fig. 9: eine Draufsicht auf vier zusammengeführte Werkstoffbahnen;
Fig. 10: die Eingriffweise der ersten Spannvorrichtung;
Fig. 11: das Schließen der ersten Spannvorrichtung;
Fig. 12: die Eingriffsweise der zweiten Spannvorrichtung;
Fig. 13: das Schließen der zweiten Spannvorrichtung;
Fig. 14: eine Seitenansicht eines Nockenantriebs;
Fig. 15: eine Schnittdarstellung durch ein Nockenrad eines Nockenantriebs;
Fig. 16: eine Draufsicht und Seitenansicht mit erster, zweiter und dritter Spannvorrichtung ;
Fig. 17: eine Draufsicht auf eine zweite Schneidvorrichtung;
Fig. 18: eine Schrägansicht einer ersten Rolle einer zweiten Schneidvorrichtung;
Fig. 19: eine seitliche Schnittansicht einer zweiten Schneidvorrichtung;
Fig. 20: eine Draufsicht und Seitenansicht mit zweiter Schneidvorrichtung und zwei Magazinen;
Fig. 21: eine Seitenansicht der dritten Spannvorrichtung, der Greifmittel und eines Magazins;
Fig. 22: eine Draufsicht auf ein Förderband mit fertigem und unfertigem Zellpaket;
Fig. 23: eine Seitenansicht eines ersten Schritts zum Verkleben des Zellstapels;
Fig. 24: eine Seitenansicht eines zweiten Schritts zum Verkleben des Zellstapels;
Fig. 25: eine Seitenansicht eines dritten Schritts zum Verkleben des Zellstapels;
Fig. 26: eine Seitenansicht eines vierten Schritts zum Verkleben des Zellstapels;
Fig. 27: eine Seitenansicht auf die Ablage eines Zellpakets auf dem Förderband;
Fig. 28: eine Draufsicht auf ein fertiges Zellpaket; und
Fig. 29: eine alternative Ausführungsform einer zweiten Schneidvorrichtung.

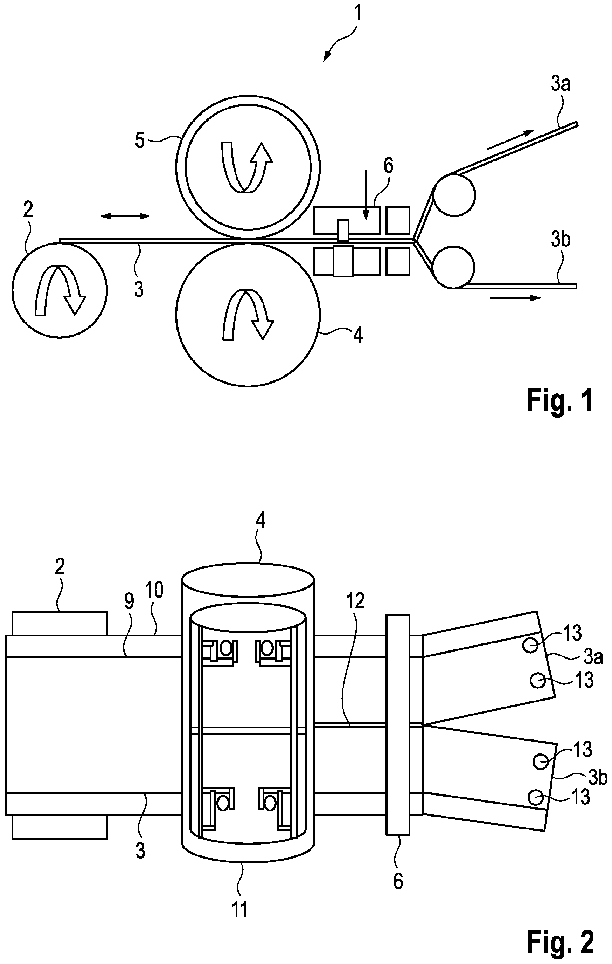

In Figur 1 ist eine erste Schneidvorrichtung 1 in einer Seitenansicht dargestellt. Auf der linken Seite der Figur 1 befindet sich eine erste Vorratseinrichtung 2, die einen Vorrat einer ersten Werkstoffbahn 3 aufweist. Die erste Vorratseinrichtung 2 kann beispielsweise eine vorproduzierte Einheit sein, die ein kalandriertes Muttercoil mit einer ersten Werkstoffbahn 3, beispielsweise für eine Anode 7 einer Batteriezelle 8, umfasst. Die kalandrierte und zu einem Coil gewickelte erste Werkstoffbahn 3 weist eine besonders gleichmäßige Schichtdicke auf und wird der ersten Schneideinrichtung 1 unter möglichst konstanten und definierten Zugkräften zugeführt, um einen Faltenwurf in der ersten Werkstoffbahn 3 zu vermeiden. Die erste Schneideinrichtung 1 besteht aus einer Unterwalze 4, einer Oberwalze 5 sowie einer Locheinheit 6. Der in der ersten Schneidvorrichtung 1 vorgenommene Zuschnitt wird nachfolgend noch näher erläutert. Bei der hier gezeigten Ausführungsform weist die erste Werkstoffbahn 3 eine Breite auf, die so gewählt ist, dass die Werkstoffbahn 3 während des Zuschnitts in Längsrichtung geteilt werden kann, sodass in der ersten Schneidvorrichtung 1 gleichzeitig zwei erste Werkstoffbahnen 3a, 3b entstehen, die nachfolgend weiterverarbeitet werden können. Alternativ zu der hier dargestellten Ausführungsform, bei der die erste Werkstoffbahn 3 eine Breite aufweist, die der doppelten Breite einer zugeschnittenen ersten Werkstoffbahn 3a, 3b entspricht, kann jedoch auch ohne weiteres eine erste Werkstoffbahn 3 verwendet werden, die der einfachen Breite oder einer mehrfachen Breite der zugeschnitten ersten Werkstoffbahn 3a, 3b entspricht. Im zweiten Fall müsste eine entsprechende Mehrzahl von Trendschnitten in Längsrichtung der Werkstoffbahn 3 vorgesehen werden. Zur Durchführung des Zuschnitts kann die Unterwalze 4 beispielsweise aus einem gehärteten Werkstoff, wie etwa Wolframkarbid oder Chromstahl, bestehen. Die Locheinheit 6 ist in Form einer Stanze ausgebildet, die dazu geeignet ist, Löcher in die jeweilige geteilte erste Werkstoffbahn 3a, 3b zu stanzen.

In Figur 2 ist die erste Schneidvorrichtung 1 nach Figur 1 in einer Draufsicht dargestellt. Von der links angeordneten ersten Vorratseinrichtung 2 wird die erste Werkstoffbahn 3 der dargestellten Unterwalze 4 nach rechts zugeführt. Die erste Werkstoffbahn 3 weist einen Anodenbereich 9 und einen Rand 10 auf. Der Anodenbereich 9 ist mit einem Werkstoff beschichtet, der für die spätere Verwendung als Anode 7 in einer Batteriezelle 8 geeignet ist. Einer sogenannten Anodenaktivschicht. Das Substrat der Anode ist vorzugsweise ein Kupferwerkstoff. Gut erkennbar ist hierbei, dass die erste Werkstoffbahn 3 doppelt so breit ist, wie die ersten Werkstoffbahnen 3a, 3b nach dem ersten Zuschnitt. Die Unterwalze 4 weist ein Rotationsmesser 11 auf, dass einen Längsschnitt 12 mittig in die Werkstoffbahn 3 einbringt. Nachfolgend erzeugt die Locheinheit 6 Aufnahmelöcher 13, die eine definierte Anfangsstelle der Werkstoffbahn 3 bzw. der geteilten Werkstoffbahn 3a, 3b bilden.

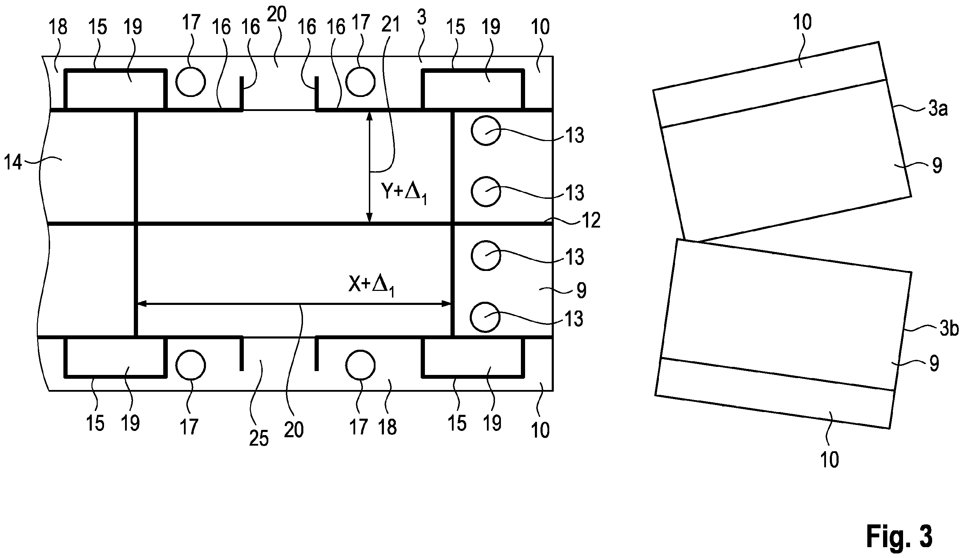

Die Figur 3 zeigt eine alternative Ausführungsform der Erfindung, bei der die erste Schneidvorrichtung 1 einen komplexeren Zuschnitt der ersten Werkstoffbahn 3 ausführt. Bei dieser Ausführungsform sind neben dem Längsschnitt 12, der longitudinal verläuft, ein transversal verlaufender Trennschnitt 14, ein Fensterschnitt 15, ein zweiteiliger Ableiterschnitt 16 sowie Transportlöcher 17 durch die erste Schneidvorrichtung 1 im Verlauf des ersten Zuschnitts in die erste Werkstoffbahn 3 eingebracht worden. Hierzu ist es lediglich erforderlich das in der Unterwalze 4 angeordnete Rotationsmesser 11 mit einer entsprechenden Schneidkontur auszugestalten.

Hierbei ist es wichtig, dass der Rand 10 in transversaler Richtung an keiner Stelle vollständig durchtrennt wird. Nur durch eine durchgehende Verbindung kann der Rand 10 seine Funktion als Transportabschnitt 18 ausüben und Zugkräfte in Längsrichtung der ersten Werkstoffbahn 3 aufnehmen und übertragen. Solche Transportkräfte können beispielsweise mittels Rollen auf den Transportabschnitt 18 übertragen werden. Alternativ können aber auch mechanische Elemente in die Transportlöcher 17 eingreifen und so die erste Werkstoffbahn 3 kontinuierlich, schnell, unterbrechungsfrei und mit hoher Präzision fördern.
Weiterhin sind mit den Fensterschnitten 15 eingebrachte Fenster 19 für die Erfindung von Bedeutung, da durch diese Fenster 22 ein Beschnitt von darunter bzw. darüber liegenden Werkstoffbahnen möglich wird.
Der an dieser Stelle bereits eingebrachte Trennschnitt 14 ist in der Längsrichtung 20 in einem Abstand von X + Δ₁ eingebracht. Dies bedeutet, die später fertig gestellte Anode 7 wird eine Länge von X + Δ₁ aufweisen. Entsprechend wird eine Breite 21 der Anode 7 ein Maß von Y + Δ₁ aufweisen, welches im Wesentlichen der Breite des vom Rand 10 entfernte und innenliegenden Abschnitts des Ableiterschnitts 16 entspricht. Die beiden in einem Transportabschnitt 18 nebeneinander angeordneten transversalen Abschnitte der Ableiterschnitte 16 definieren bereits die Breite eines später zu erzeugenden Ableiters 25 der Elektrode, die in diesem Fall eine Anode 7 ist. Während die Aufnahmelöcher 13 nur bei einem erstmaligen Anlegen einer Werkstoffbahn 3 benötigt werden, können die Transportlöcher 17 fortlaufend, d. h. während des gesamten Herstellungsprozesses, sowohl für die Übertragung von Antriebskräften, als auch zur sehr präzisen Positionierung der Werkstoffbahn 3 genutzt werden.

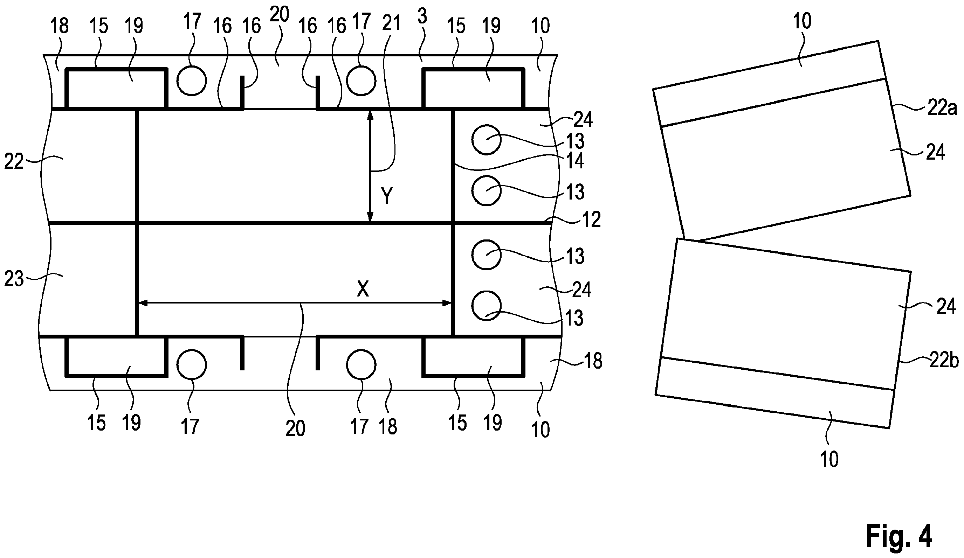

Die Figur 4 zeigt eine zweite Werkstoffbahn 22, die einen ersten Zuschnitt erfährt, der im Wesentlichen mit dem in Figur 3 erläuterten Zuschnitt übereinstimmt. Der Unterschied bei der in dieser Figur dargestellten Ausführungsform besteht darin, dass es sich um eine Kathode 23 handelt. Dazu wird die zweite Werkstoffbahn 22 zunächst der ersten Schneidvorrichtung 1 von einer zweiten Vorratseinrichtung 26 zugeführt. Hierbei ist es besonders effizient, wenn mehrere erste Schneidvorrichtungen parallel genutzt werden, um beispielsweise an ersten Werkstoffbahnen 3 von Anoden 7 und zweiten Werkstoffbahnen 22 von Kathoden 23 gleichzeitig den ersten Zuschnitt auszuführen. Um als Kathode 23 verwendet zu werden, sind der Transportabschnitt 18 mit dem Rand 10 und ein Kathodenbereich 24 aus entsprechenden Werkstoffen gefertigt, die für eine Kathode 23 einer Batteriezelle 8 geeignet sind. Hierfür kommt beispielsweise ein aluminiunhaltiges Substrat als Träger für ein Kathodenaktivmaterial in Betracht. Ein weiterer Unterschied zur Anode 7 besteht darin, dass die Länge der Kathode 23 in Längsrichtung 20 und deren Breite 21 geringfügig kleiner ist, als die Länge in Längsrichtung 20 und die Breite 21 der Anode 7 gemäß Figur 3. Bei den dargestellten Ausführungsformen ist die Anode 7 um das Differenzmaß Δ₁ größer als die Kathode 23. Dies trifft sowohl in Längsrichtung 20 als auch in Richtung der Breite 21 zu.

Die nach dem ersten Zuschnitt entstandenen separaten zweiten Werkstoffbahnen 22a, 22b können danach unmittelbar und separat voneinander weiterbearbeitet werden.

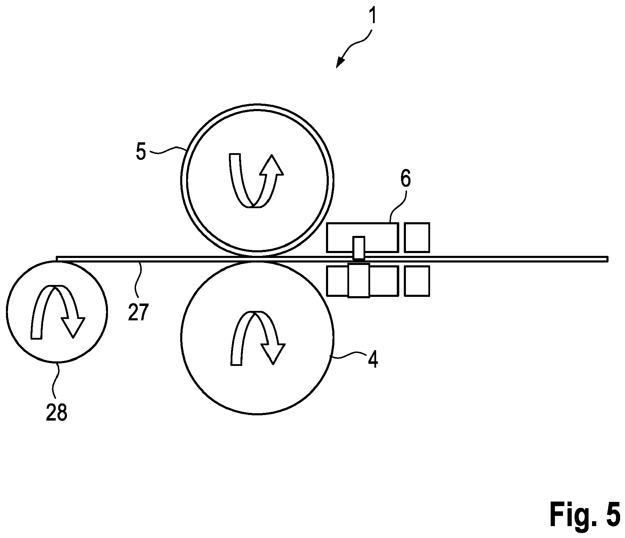

In Figur 5 ist eine weitere erste Schneidvorrichtung 1 dargestellt, der eine dritte Werkstoffbahn 27 von einer dritten Vorratseinrichtung 28 zugeführt wird. Bei der dritten Werkstoffbahn 27 handelt es sich um einen Separator 29, der isolierende Eigenschaften aufweist und dazu geeignet ist Anoden 7 und Kathoden 23 elektrisch voneinander zu isolieren. Die dritte Werkstoffbahn 27 wird wiederum mittels einer Unterwalze 4 und einer Oberwalze 5 einem ersten Zuschnitt unterzogen. Ebenfalls vorgesehen ist eine Locheinheit 6 zur Ausbildung von Aufnahmelöchern 13.

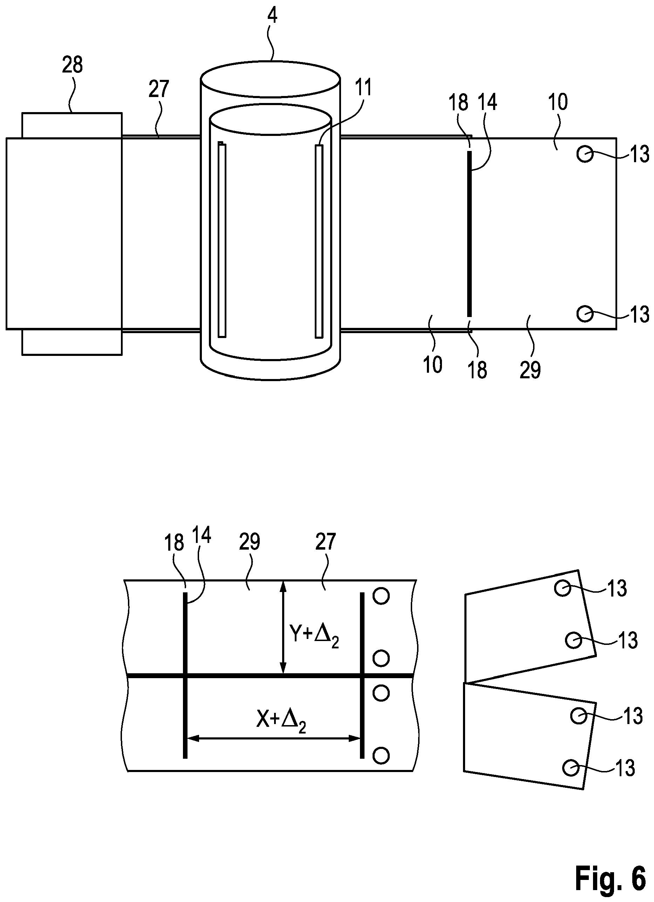

Die Figur 6 zeigt im oberen Bereich eine Unteransicht auf die Unterwalze 4, wobei die Locheinheit 6 nicht dargestellt ist. In der Unterwalze 4 ist bei dieser Ausführungsform ein Rotationsmesser 11 vorgesehen, dass dazu ausgebildet ist an definierten Stellen der dritten Werkstoffbahn 27 transversale Trennschnitte 14 einzubringen, wobei sich jedoch diese Trennschnitte 14 nicht über die gesamte Breite der dritten Werkstoffbahn 27 erstrecken, sondern einen Rand 10 aussparen. Hierdurch entstehen in dem Rand 10 auf beiden Seiten der dritten Werkstoffbahn 27 Transportabschnitte 18, die Zugkräfte aufnehmen können, wodurch eine weitere mechanische Verarbeitung der dritten Werkstoffbahn 27 im kontinuierlichen und nicht durchtrennten Zustand möglich wird. Weiterhin wurden von der in dieser Figur nicht dargestellten Locheinheit 6 Aufnahmelöcher 13 in die dritte Werkstoffbahn 27 eingebracht.

Im unteren Bereich der Figur 6 ist eine Variante dargestellt, bei der die dritte Werkstoffbahn 27 doppelt so breit ist, wie die für die Batteriezelle 8 benötigte Breite des Separators 29. In diesem Fall kann die Unterwalze 4 beispielsweise so ausgebildet werden, dass sie zusätzlich zu dem transversalen Trennschnitt 14 einen longitudinal verlaufenden Längsschnitt 12 ausführt und die dritte Werkstoffbahn 27 der Länge nach in zwei Hälften aufteilt. Für einen sicheren Betrieb einer Batteriezelle 8 ist es vorteilhaft, wenn der Separator 29 größer ist als die zu isolierende Anode 7 bzw. Kathode 23. Von daher wird der Separator 29 ausgehend von den zuvor beschriebenen Basismaßen X und Y der Kathode 23 auf eine Breite von Y + Δ₂ und eine Länge von X+ Δ₂ zugeschnitten. Hierbei stellt Δ₂ das Übermaß dar, um welches der Separator 29 größer sein soll als die Kathode 23.

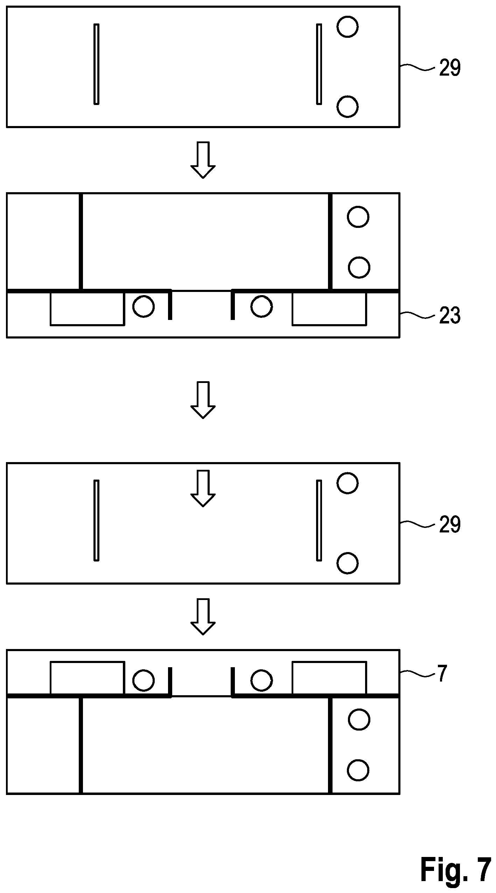

In Figur 7 sind vier Werkstoffbahnen dargestellt, die zu einem Teilstapel übereinander zusammengeführt werden sollen. Es handelt sich dabei von unten nach oben um eine Anode 7, einen Separator 29, eine Kathode 23 sowie nochmals einen Separator 29. Alle Werkstoffbahnen haben in dem dargestellten Zustand bereits einen ersten Zuschnitt erfahren.

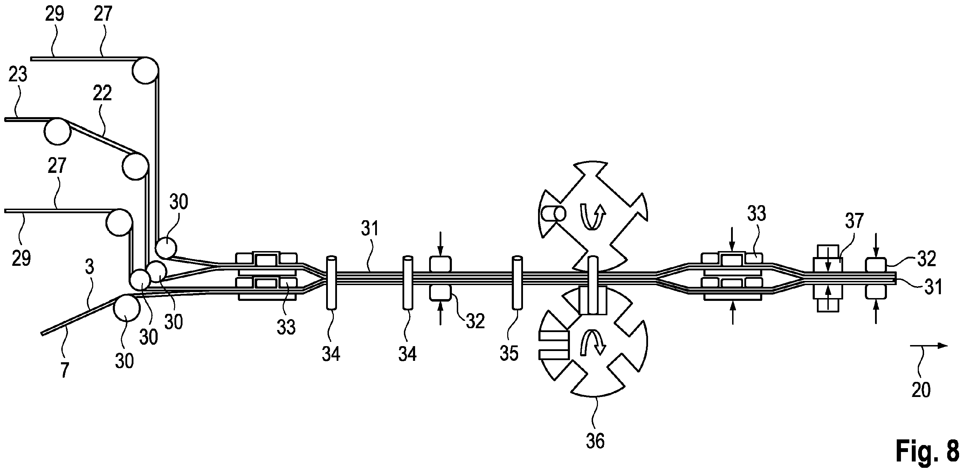

In Figur 8 wird der nachfolgende Verfahrensschritt in einer seitlichen Ansicht dargestellt. Von links kommend werden jeweils im Zustand nach dem ersten Zuschnitt eine erste Werkstoffbahn 3 eine zweite Werkstoffbahn 22 sowie zwei dritte Werkstoffbahn 27 in der Weise zugeführt, dass eine dritte Werkstoffbahn 27 zwischen der ersten Werkstoffbahn 3 und der zweiten Werkstoffbahn 22 angeordnet ist und eine weitere dritte Werkstoffbahn über der zweiten Werkstoffbahn 22. Die vier Werkstoffbahnen 3, 27,22 werden dabei über Führungsmittel 30 zu einem Teilstapel 31 zusammengeführt. Hierbei greift am rechten Ende des Teilstapels 31 eine erste Spannvorrichtung 32 und am linken Ende des Teilstapels 31 eine zweite Spannvorrichtung 33 an. Die Funktionsweise der Spannvorrichtungen 32 und 33 wird nachfolgend noch eingehender erläutert. Ein Weitertransport des Teilstapels 31 in Längsrichtung 20 wird durch Transportstifte 34 erreicht, die in die Transportlöcher 17 der ersten Werkstoffbahn 3 und der zweiten Werkstoffbahn 22 eingreifen. Die Transportstifte 34 werden von einer nicht dargestellten Antriebseinrichtung angetrieben und üben eine Antriebskraft auf den jeweiligen Transportabschnitt 18 aus. Für ein erstmaliges Anlegen einer Werkstoffbahn sind zudem Aufnahmestifte 35 vorgesehen, die in die Aufnahmelöcher 13 eingreifen und so abgestimmt sind, dass die neu anzulegende Werkstoffbahn und deren Schnittkontur aus dem ersten Zuschnitt in einer definierten Lage präzise zugeführt wird. Im weiteren Verlauf schließt sich daran ein Nockenantrieb 36 an, der einerseits dazu ausgelegt ist die Transportstifte 34 bzw. die Aufnahmestifte 35 anzutreiben und andererseits einen problemlosen Durchlauf der ersten Spannvorrichtung 32 und der zweiten Spannvorrichtung 33 in die weiter rechts dargestellte Position erlaubt, wo eine dritte Spannvorrichtung 37 an den Teilstapel 31 angelegt wird.

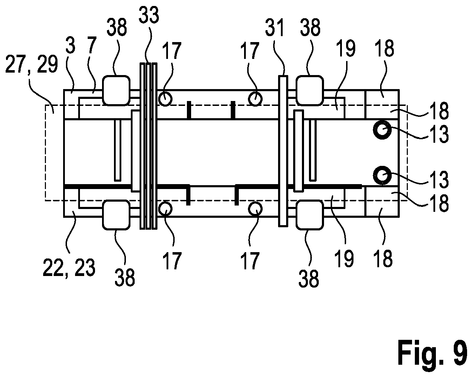

Die darüber dargestellte Figur 9 zeigt den Teilstapel 31 nach Figur 8 nochmals in einer Draufsicht. Gut erkennbar sind dabei die erste Spannvorrichtung 31 und die zweite Spannvorrichtung 33. Hierbei ist auch deutlich zu erkennen, dass die Transportabschnitte 18 der Anode 7, der Kathode 23 und der Separatoren 29 in transversale Richtung, d. h. in Querrichtung, versetzt angeordnet sind. Dies führt insbesondere dazu, dass der Transportabschnitt 18 der Separatoren 29 vollständig innerhalb der Fenster 19 in der Anode 7 bzw. in der Kathode 23 liegen. Um ständig eine korrekte transversale Ausrichtung der Werkstoffbahnen zu gewährleisten ist eine Überwachungsvorrichtung 38 vorgesehen, die beispielsweise als Lageerkennung oder optische Bahnkantenregelung zur Breitenkontrolle des Separators 29 ausgebildet sein kann.

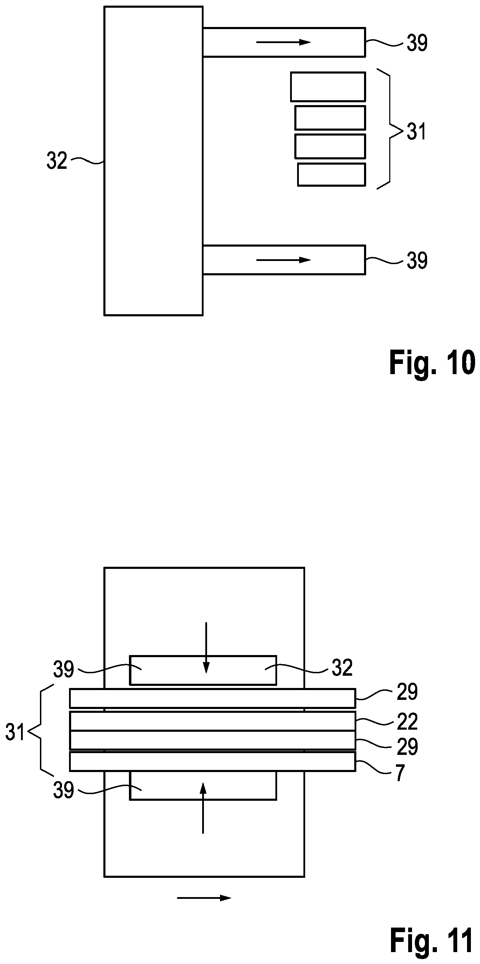

Die Figur 10 zeigt die erste Spannvorrichtung 32 in einer Schnittansicht in Längsrichtung 20 des Teilstapels 31. Beim Anlegen der ersten Spannvorrichtung 31 werden zwei Greifer 39 oberhalb und unterhalb des Teilstapels 31 in Position gebracht.

In Figur 11 ist die erste Spannvorrichtung 32 dann in einem geschlossenen Zustand dargestellt, bei dem die Greifer 39 aufeinander zu verfahren sind und dabei den Teilstapels 31 fest verspannen. Hierdurch ist gewährleistet, dass keine Relativbewegung zwischen den Werkstoffbahnen 3, 22, 27 bei der nachfolgenden Bearbeitung auftreten kann.

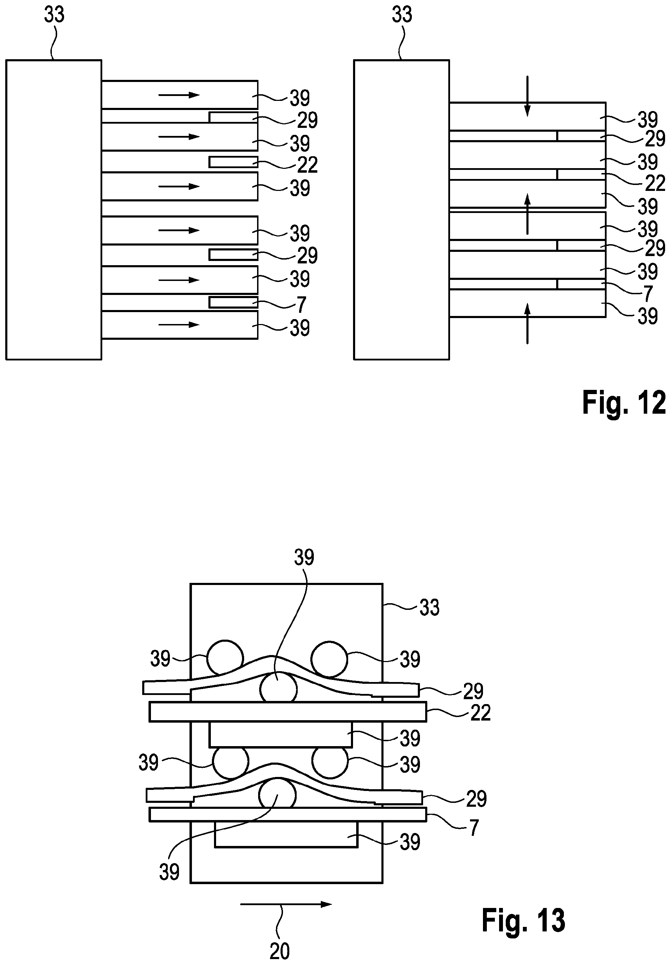

Die Figur 12 zeigte die zweite Spannvorrichtung 33 auf der linken Seite in einem geöffneten Zustand und auf der rechten Seite in einem geschlossenen Zustand. Beim Ansetzen der zweiten Spannvorrichtung 33 werden mehrere Greifer 39 von der Seite kommend zwischen die Werkstoffbahnen 3, 22, 27 eingeschoben. Nachdem dies erfolgt ist, werden die Greifer 39 wiederum aufeinander zu bewegt, um die zweite Spannvorrichtung 33 zu schließen.

Wie in Figur 13 dargestellt ist, sind die Greifer 39 bei dieser Ausführungsform der zweiten Spannvorrichtung 33 unterschiedlich ausgebildet. So gibt es Greifer 39 mit einem runden Querschnitt und Greifer 39 mit einem rechteckigen Querschnitt. Werden nun die Greifer 39 zueinander verfahren, so werden die runden Greifer 39 von der jeweils dazwischenliegenden Werkstoffbahn, in diesem Fall sind es die beiden dritten Werkstoffbahnen 27 der Separatoren 29, in zunehmendem Maße umschlungen. Hierdurch tritt der Effekt ein, dass die für diese Umschließung benötigte zusätzliche Weglänge der dritten Werkstoffbahnen 27 von außen nach geführt wird. Schließt man nun zuerst die erste Spannvorrichtung 32 und anschließend die zweite Spannvorrichtung 33, so wird das lose Ende der dritten Werkstoffbahn 27, welches am hinteren linken Ende des Teilstapels 31 liegt, in Längsrichtung 20 nachgeführt und damit nach vorne bzw. nach in der Bildebene nach rechts gezogen.

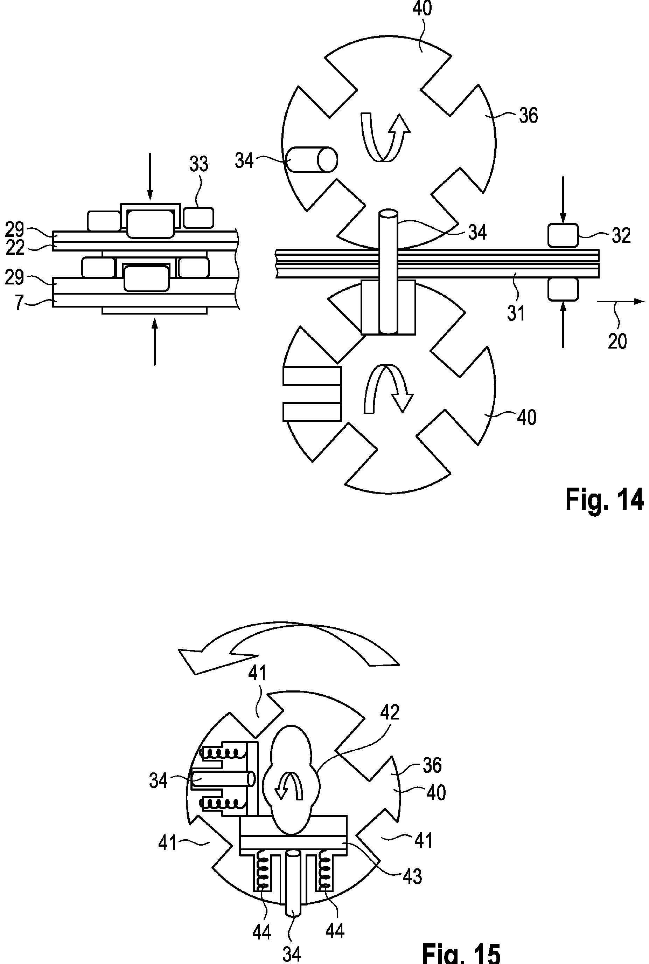

Die Figur 14 zeigt den Teilstapel 31 mit den nachgeführten Separatoren 29 beim Passieren des Nockenantriebs 36. Der Transportstift 34 ist dabei ausgefahren und steht mit einem gegenüberliegenden Nockenrad 40 und dem Teilstapel 31 im Eingriff. Durch die Drehung der beiden Nockenräder 40 des Nockenantriebs 36 wird der Teilstapel 31 in Längsrichtung 20 weiter gefördert. Ein zweiter Transportstift 34 ist in dem oberen Nockenrad 40 in einem eingezogenen Zustand dargestellt und steht noch nicht mit dem Teilstapel 31 im Eingriff.

In Figur 15 ist ein Nockenrad 40 eines Nockenantriebs 36 in einer Schnittdarstellung gezeigt. Das Nockenrad 40 weist ausfahrbare Transportstifte 34 und Ausnehmungen 41 auf. Während die Transportstifte 34 dazu dienen in die Transportlöcher 17 der Werkstoffbahnen einzugreifen, dienen die Ausnehmungen 41 dazu, dass die erste Spannvorrichtung 32 und die zweite Spannvorrichtung 33 das Nockenrad 40 problemlos durchlaufen können. Das Aus-bzw. Einfahren der Transportstifte 34 kann in besonders einfacher Weise mittels einer Kurvenbahn 42 gesteuert werden, indem eine mit dem Transportstifte 34 verbundene Platte 43 mittels Federn 44 gegen die Kurvenbahn 42 gedrückt wird. Hierbei ist die Kurvenbahn 42 so ausgebildet, dass der Transportstifte 34 genau dann ausgefahren wird, wenn im Laufe der Drehbewegung des Nockenrads 40 die Eingriffsmöglichkeit in ein Transportloch 17 besteht.

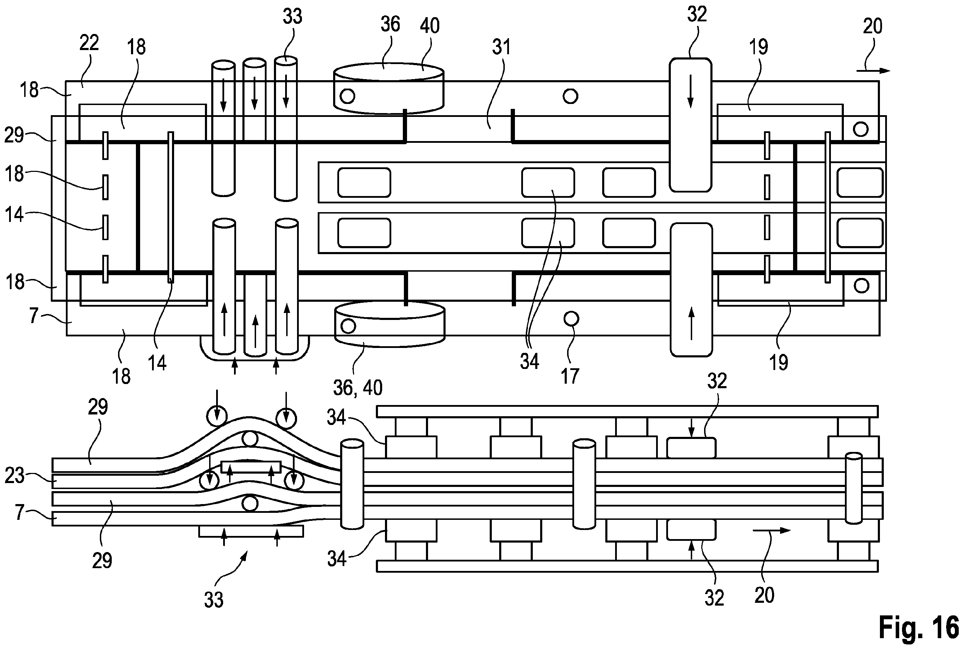

Die Figur 16 zeigt den Teilstapel 31 beim Durchlaufen des Nockenantriebs 36 in einer Draufsicht und einer Seitenansicht. Hierbei sind die erste Spannvorrichtung 32 und die zweite Spannvorrichtung 33 gesetzt. Der transversale Trennschnitt 18 in den Separatoren 29 ist dabei einmal gestrichelt und einmal als volle Linie dargestellt. Die gestrichelte Linie zeigt die Lage des Trennschnitt 18 vor dem Anlegen der ersten Spannvorrichtung 32 und der zweiten Spannvorrichtung 33. Hierbei wurde zunächst die erste Spannvorrichtung 32 angelegt und anschließend die zweite Spannvorrichtung 33. Hierdurch konnte die beim Anlegen der zweiten Spannvorrichtung 33 benötigte zusätzliche Weglänge der Separatoren 29 nur von der linken Seite her, d. h. von der dritten Vorratseinrichtung 28 nach geführt werden. Entsprechend dieser zusätzlich nachgeführten Weglänge ist der gestrichelt dargestellte Trennschnitt 18 nach rechts auf die Position des als volle Linie dargestellten Trennschnitts 18 gewandert. Dies bedeutet, dass im kontinuierlichen Herstellungsprozess eine größere Länge der dritten Werkstoffbahn 27 abgegeben wird, als die von der ersten Vorratseinrichtung 2 und der zweiten Vorratseinrichtung 26 abgegebenen Längen der ersten Werkstoffbahn 3 und der zweiten Werkstoffbahn 22. Hierdurch wird es möglich, dass der Separator 29 im fertigen Zustand nicht nur in transversale Richtung über die Anode 7 und die Kathode 23 hinausragt, sondern auch in Längsrichtung 20 über diese hinausragt und somit eine sichere und zuverlässige Isolation gewährleistet. Im unteren Bereich der Figur 16 ist nochmals eine Seitenansicht dieses oben dargestellten Abschnitts gezeigt. Gut erkennbar ist hierbei, wie die zweite Spannvorrichtung 33 im gesetzten Zustand die Weglängen der Separatoren 29 vergrößert. Auch in dieser Ansicht ist gut erkennbar, dass die Transportabschnitte 18 der drei Werkstoffbahnen 3, 22, 27 in transversale Richtung klar voneinander separiert angeordnet sind. Zudem ist auch hier der Transportabschnitt 18 der Separatoren 29 soweit innenliegend, d. h. vom Rand 10 entfernt, angeordnet, dass dieser innerhalb der Fenster 19 liegt. Die seitlich, d. h. in transversaler Richtung, versetzte Anordnung der Transportabschnitte 18 hat hierbei mehrere Vorteile. So können die Transportstifte 34 auf einer Seite in die Transportlöcher 17 der Anode 7 eingreifen und auf der gegenüberliegenden Seite in die Transportlöcher 17 der Kathode 22. Beide Werkstoffbahnen 3, 22 können hierdurch synchron angetrieben werden, indem die dafür erforderlichen Antriebskräfte, die in der Regel als Zugkräfte eine Werkstoffbahn 3, 22, 27 eingeleitet werden, an die Werkstoffbahnen 3, 22 übertragen werden.

Ein weiterer Vorteil der seitlich versetzten Anordnung der Transportabschnitte 18 kann erzielt werden, wenn der Transportabschnitt 18 einer Werkstoffbahn 3, 22 ,27, wie beispielsweise der Transportabschnitt 18 des Separators 29, so angeordnet wird, dass dieser über wenigstens einem Fenster 19 der benachbarten Werkstoffbahnen 3, 22, wie beispielsweise der Anode 7 oder der Kathode 23 liegt. Bei dieser Ausführungsform ist es möglich den Separator 29, an einer beliebigen Stelle innerhalb des Fensters 19 zu trennen. Genauer gesagt wird dazu dessen Transportabschnitt 18 an dieser innerhalb des Fensters 19 frei wählbaren Position in transversaler Richtung durchtrennt. Hierzu muss lediglich der im ersten Zuschnitt von der ersten Schneidvorrichtung 1 in den Separator 29 eingebrachte Trennschnitt 14 entsprechend innerhalb des Fensters 19 positioniert werden. Ist dies, wie in der Figur gezeigt erfolgt, kann der nun noch im Separator bestehende Transportabschnitt 18 sehr einfach dadurch transversal durchtrennt werden, indem der Trennschnitt 18 bis zum seitlichen Rand des Separators 29 verlängert wird. Dies kann sehr einfach mittels einer zweiten Schneidvorrichtung 45 durchgeführt werden, die beispielsweise als Rollstanz- oder Rollschneidvorrichtung ausgebildet ist. Im Rahmen dieses zweiten Zuschnitts ist es dann insbesondere auch möglich noch weitere Schnitte aufzuführen, wie beispielsweise das Freischneiden der Ableiter 25 durch Verlängerung des Ableiterschnitts 16 bis zum Rand oder das Abtrennen der seitlichen Transportabschnitte 18 von Anode 7 und Kathode 23 durch einen Schnitt in Längsrichtung des Teilstapels 31.

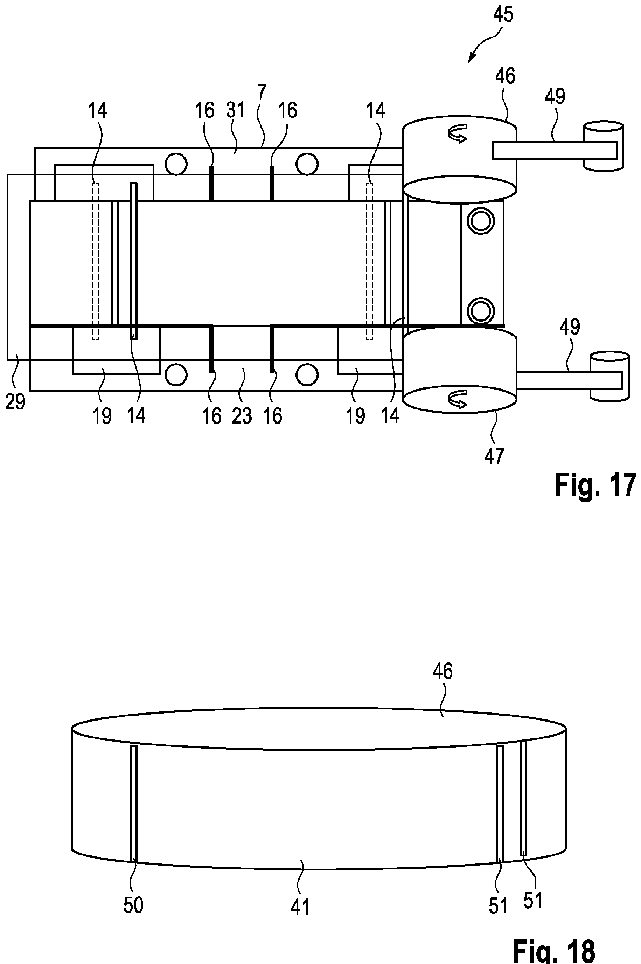

In Figur 17 ist eine zweite Schneidvorrichtung 45 in einer Draufsicht dargestellt. Mittels dieser zweiten Schneidvorrichtung 45 wird ein zweiter Zuschnitt ausgeführt, bei dem der Teilstapel 31 nun auch in transversale Richtung aufgetrennt wird. Hierbei werden die bis zu diesem Punkt verwendeten Transportabschnitte 18 abgetrennt. In dem hier dargestellten Zustand wird der Teilstapel 31 gleichzeitig von den hier nicht dargestellten ersten, zweiten und dritten Spannvorrichtungen 32, 33, 37 gehalten. Der Trennschnitt 14 ist dabei aufgrund der gesetzten zweiten Spannvorrichtung 33 von der gestrichelten Linie gezeigten Ausgangsposition in die mit der vollen Linie dargestellten Position nach rechts verschoben.
Die zweite Schneidvorrichtung 45 weist eine erste Rolle 46 und eine zweite Rolle 47 auf, die mit jeweils einer Gegenrolle 48 zusammenwirken. Hierbei beschneidet die erste Rolle 46 die Anode 7 und eine Seite der Separatoren 29. Die zweite Rolle 47 beschneidet die Kathode 23 und die andere Seite der Separatoren 29. Der Beschnitt der Separatoren 29 erfolgt, indem im Bereich der Fenster 19 der Trennschnitt 14 durch den Separator 29 transversal verlängert wird, sodass aus den endlosen Separatoren 29 nun in Längsrichtung unterteilte einzelne Separatoren 29 entstehen. Durch das Fenster 19 ist es erst möglich den Separator 29 getrennt von den Elektroden zu beschneiden.

Ferner werden die Anode 7 und die Kathode 23 fertigbeschnitten, indem die jeweiligen Ableiterschnitte 16 von der ersten Rolle 46 bzw. von der zweiten Rolle 47 entweder transversal nach außen zum Rand 10 hin verlängert bzw. durch einen in longitudinaler Richtung verlaufenden Längsschnitt durchtrennt werden. Durch den Längsschnitt werden dann Streifen 49 abgetrennt. Beide Schnitte, d.h. in transversaler Richtung und in longitudinaler Richtung können auch gleichzeitig ausgeführt werden.

Die Figur 18 zeigt die erste Rolle 46 in einer vergrößerten Darstellung. Die Rolle 46 weist dabei Ausnehmungen 41 auf, so dass die erste und zweite Spannvorrichtung diese problemlos passieren können. Zudem sind Separatormesser 50 zum Verlängern der Trennschnitte 14 in den Separatoren 29 und Ableitermesser 50 zum Verlängern der Ableiterschnitte 16 vorgesehen.
Zudem kann an einer der Rollen 46, 47, 48 ein radial angeordnetes Messer vorgesehen werden, um die Streifen 49 im gleichen Arbeitsgang abzutrennen.

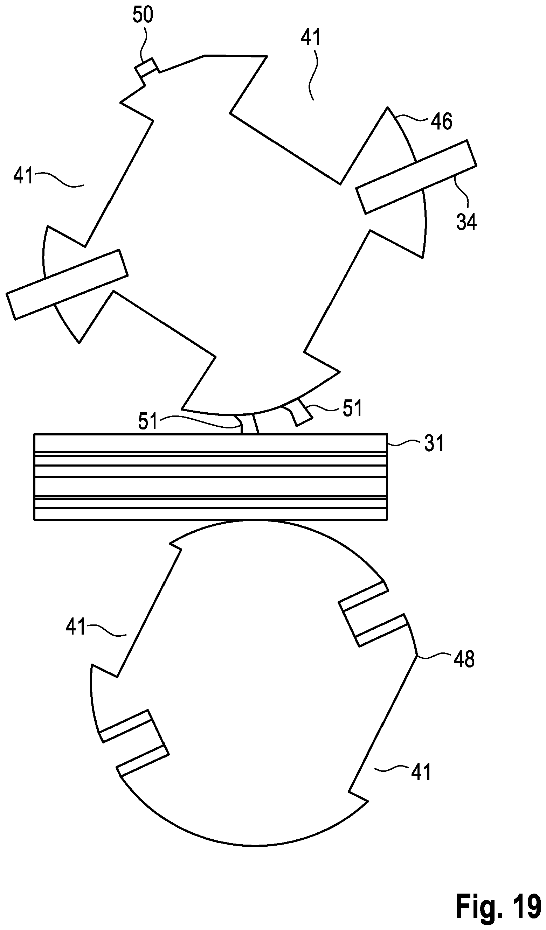

In Figur 19 ist noch einmal die erste Rolle 46 zusammen mit der Gegenrolle 48 dargestellt, zwischen denen sich ein Teilstapel 31 befindet. Sowohl die Gegenrolle 48 als auch die erste Rolle 46 weisen Ausnehmungen 41 auf, um ein problemloses Durchlaufen der ersten Spannvorrichtung 32 und der zweiten Spannvorrichtung 33 zu gewährleisten. Zudem weist die erste Rolle 46 Transportstifte 34 auf, die in die Transportabschnitte 18 der Anode 7 bzw. Kathode 23 eingreifen und für einen sicheren Transport sorgen, solange die Transportabschnitte 18 noch nicht abgetrennt sind. Zur Durchführung des zweiten Zuschnitts weist die erste Rolle 46 ein Separatormesser 50 und zwei Ableitermesser 51 auf, mit denen der Trennschnitt 14 in den Separatoren 29 verlängert und die Ableiter 25 freigestellt werden können.

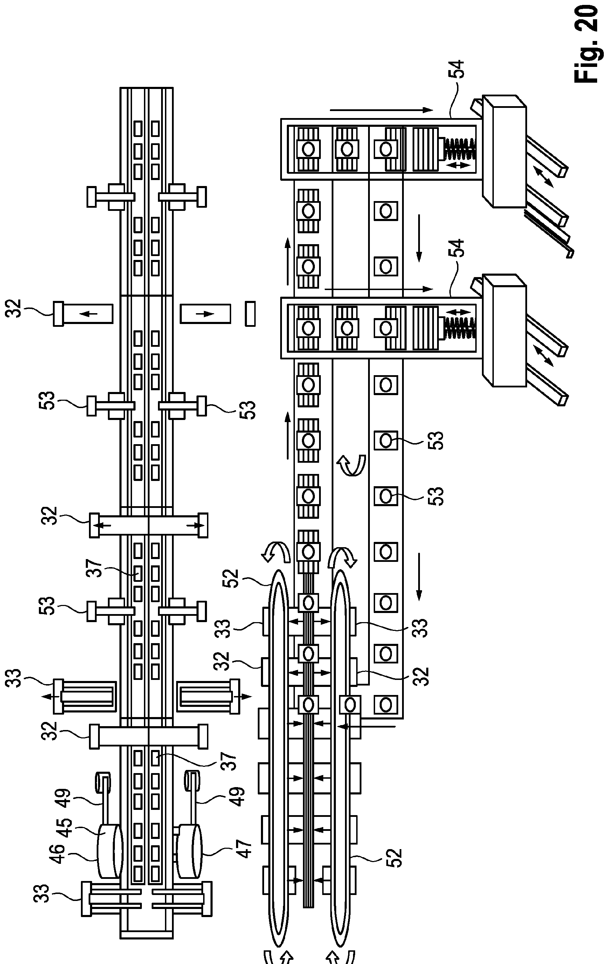

In Figur 20 ist eine Draufsicht auf die zweite Schneideinrichtung 45 dargestellt. Dabei ist von links nach rechts betrachtet zunächst die dritte Spannvorrichtung 37 gleichzeitig mit der ersten Spannvorrichtung 32 und der zweiten Spannvorrichtung 33 aktiviert. Im weiteren Verlauf der Bewegung des Teilstapels 31 nach rechts, werden dann zunächst die zweite Spannvorrichtung 33 und danach die erste Spannvorrichtung 32 gelöst, so dass sich die nachgeführten Separatoren 29 aus der umschlungenen Stellung in der zweiten Spannvorrichtung 33 zurück in eine flache Lage und parallel zur Anode 7 bzw. Kathode 22 bewegen können. Hierbei bewegen sich dann die in Längsrichtung 20 betrachtet hinteren Trennschnitt 14 der Separatoren 29 vom jeweiligen Ableiter 25 weg und ragen dadurch sicher auch in Längsrichtung 20 über die Anode 7 bzw. Kathode 22 hinaus.

Nach dem Lösen der ersten Spannmittel 32 und der zweiten Spannmittel 33 werden diese dann mittels Förderbändern 52 zurück in ihre Ausgangsposition verfahren, wo sie erneut an einen Teilstapel 31 angesetzt werden können. Gleichzeitig werden Greifmittel 53 an die Teilstapel 31 angelegt, um diese nach dem Lösen der dritten Spannmittel 37 zu Magazinen 54 weitertransportieren und dort stapeln zu können. Auch die Greifmittel 53 arbeiten, wie auch die Spannvorrichtungen 32, 33 und 37 in einem umlaufenden Verfahren, um eine schnelle und kontinuierliche Fertigung der Zellstapel 57 zu ermöglichen.

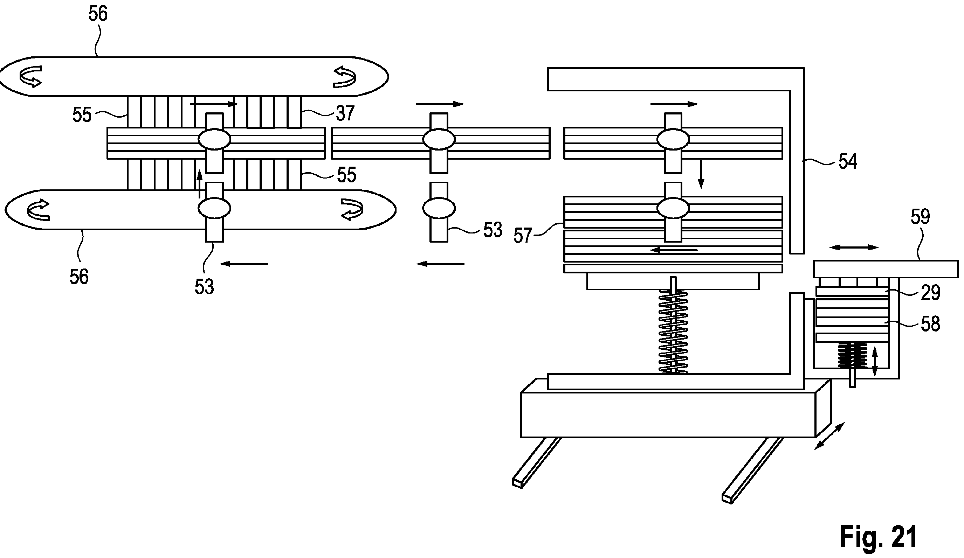

Die Figur 21 zeigt die dritte Spannvorrichtung 37 in einer Seitenansicht. Auch die dritte Spannvorrichtung 37 weist eine Mehrzahl von Spannelementen 55 auf, die an einem zweiten Förderband 56 befestigt sind, wobei sich das zweite Förderband 56 mit der gleichen Geschwindigkeit bewegt, mit der die Teilstapel 31 von der ersten Spannvorrichtung 32 und der zweiten Spannvorrichtung 33 übergeben werden. Nach der Übergabe der Teilstapel 31 an die Greifmittel 53, werden die Spannelemente 55 dann nach unten bzw. oben hinwegbewegt und in einer gegenläufigen Bewegung wieder nach links bewegt, um dort erneut an nachfolgende Teilstapel 31 angesetzt zu werden. Als nächsten Schritt führen die Greifmittel 53 die Teilstapel 31 einem Magazin 54 zu, wo mehrere Teilstapel 31 zu einem Zellstapel 57 übereinandergestapelt werden.

Da die Teilstapel 31 aus vier Werkstoffbahnen bestehen, die eine Anode 7, einen Separator 29, eine Kathode 22 und einen weiteren Separator 29 umfassen und von unten nach oben in dieser Reihenfolge übereinander angeordnet sind, wird in das leere Magazin 54 zunächst ein einzelner Separator 29 eingelegt. Dies dient dazu, einen elektrischen Kontakt der im Teilstapel 31 unten liegenden Anode 7 mit anderen Bauteilen durch diesen einzelnen Separator 29 zu vermeiden. Zu diesem Zweck wird am Magazin 54 ein Vorrat von einzelnen Separatoren 29 in einer Aufnahme 58 vorgehalten. Eine Zuführvorrichtung 59 legt dabei jedes Mal, wenn damit begonnen wird eine leeres Magazin 54 zu befüllen, beispielsweise mittels eines Saughebers, als erste Werkstoffbahn einen Separator 29 in das Magazin 54 ein. Sobald der Zellstapel 57 komplettiert ist, wird das Magazin 54 verschoben und durch eine weiteres leeres Magazin 54 ersetzt. Während dieses zweite Magazin 54 befüllt wird, kann der Zellstapel 57 in dem ersten Magazin 54 zu einem Zellpaket 60 gebunden und danach abtransportiert werden. Bei höheren Fertigungsgeschwindigkeiten können auch mehrere Magazin 54 eingesetzt werden. Hierzu können beispielsweise zwei zusätzliche Magazine 54 angeordnet werden, die parallel zu den ersten beiden Magazinen angeordnet sind und mittels weiterreichender Greifmittel 53 mit Teilstapeln 31 befüllbar sind. Wobei auch die zusätzlichen Magazine 54 im leeren Zustand von der Zuführvorrichtung 59 mit einem Separator 29 vorbestückbar sind. Hierdurch kann die Fertigung unterbrechungsfrei und mit hoher Geschwindigkeit fortlaufen.

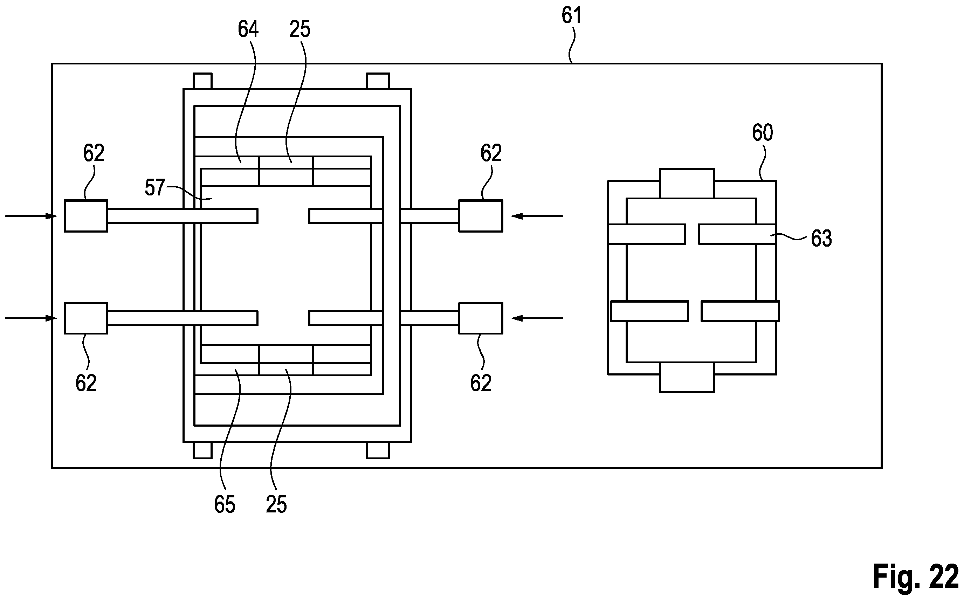

Die Figur 22 zeigt in einer Draufsicht links ein befülltes Magazin 54 mit einem Zellstapel 57 über einem Förderband 61. Rechts daneben ist ein fertiges Zellpaket 60 auf dem Förderband 61 dargestellt, das zum Abtransport bereitsteht. Schieber 62 dienen dazu den Zellstapel 57 mit einem Klebeband 63 zu einem festen Zellpaket 60 zu verbinden.

Hierbei ist der Zellstapel 57 innerhalb der Magazins 54 an seinen Stirnseiten 64 gehalten, an denen auch die Ableiter 25 liegen.

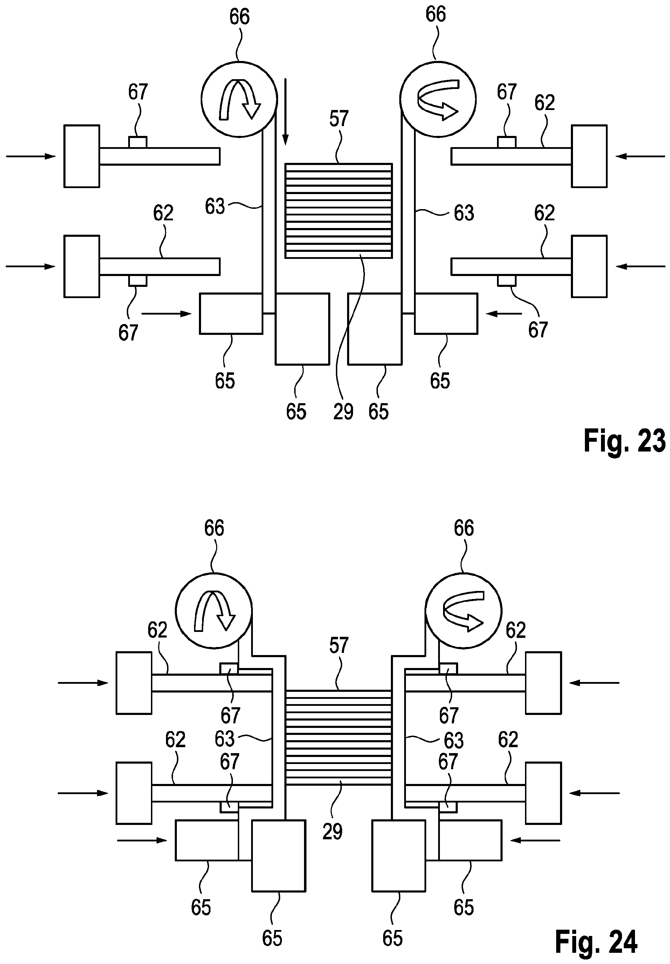

In Figur 23 ist der erste Schritt zum Verkleben dargestellt. Dabei sind die Schieber 62 zunächst seitlich nach außen verfahren und vier Klebebänder 63 werden mittels Klebeziehern 65 von Klebebandrollen 66 abgezogen.

In Figur 24 ist der zweite Schritt dargestellt, bei dem die Schieber 62 an den Zellstapel 57 herangefahren werden und das Klebeband 63 seitlich an diesen andrücken. Hierbei werden die Klebebänder 63 gleichzeitig mit Messern 67 beschnitten, die an den Schiebern 62 angeordnet sind. Während des Beschnitts wirken die Kleberzieher 65 gleichzeitig als Gegenhalter für die Messer 67.

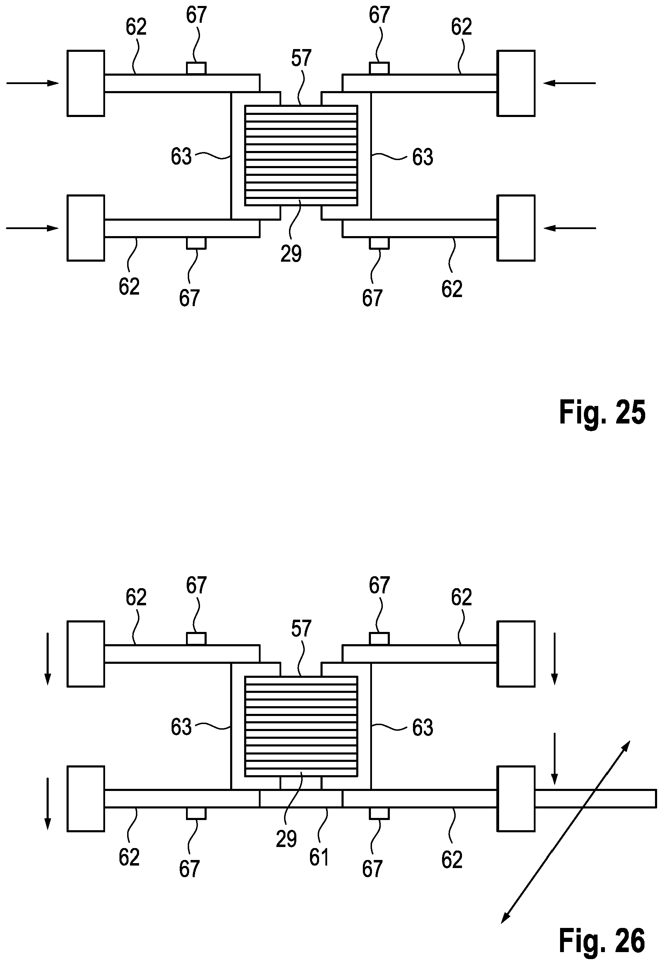

Die Figur 25 zeigt, wie die Schieber 62 anschließend weiter in Richtung des Zellstapels 57 verfahren werden und dabei die geschnittenen Klebebänder 63 an den Zellstapel 57 andrücken, so dass ein Zellpaket 60 entsteht.

Anschließend wird, wie in Figur 26 dargestellt, das so erzeugte Zellpaket 60 auf das Transportband 61 abgelegt und abtransportiert.

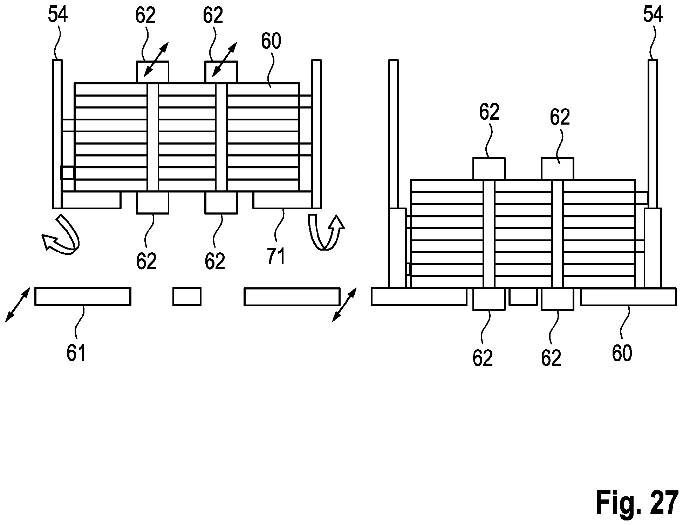

Die Figur 27 zeigt, wie sich dazu ein Boden 71 des Magazins 54 durch Wegschwenken nach unten öffnet und die Schieber 62 das Zellpaket 60 auf das Transportband 61 absetzen.

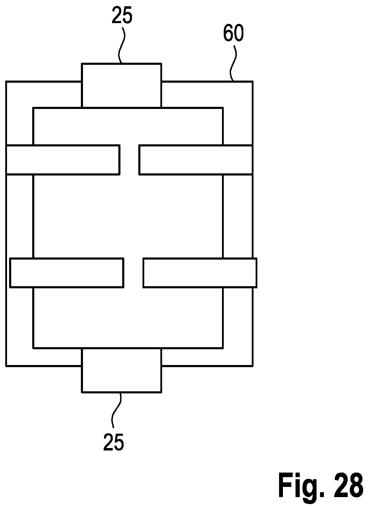

Die Figur 28 zeigt ein fertiges Zellpaket 60 mit den Ableitern 25 und den umschließenden Klebebändern 63.

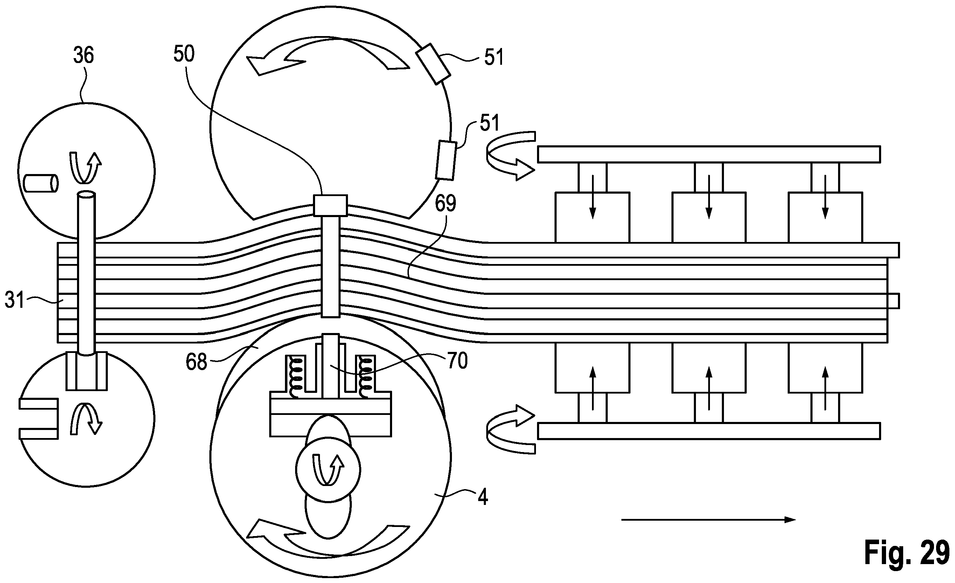

Schließlich ist in Figur 29 eine alternative Ausführungsform dargestellt, welche die Funktion einer ersten und zweiten Spannvorrichtung 32, 33 sowie einer zweiten Schneidvorrichtung 45 ausüben kann. Gezeigt ist ein Teilstapel 31, der bereits eine erste Schneidvorrichtung 1 durchlaufen hat und nun von dem Nockenantrieb 36 zur zweiten Schneidvorrichtung 45 transportiert wird. Hierbei kommt eine Unterwalze 4 zur Anwendung, die beispielsweise als nockenangetriebene Gegenwalze mit einem Formstempel 68 aus Gummi ausgebildet sein kann. Der Formstempel 68 ist dabei so ausgelegt, dass wenn ein Trennschnitt 14 eines Separators 29 in die zweite Schneidvorrichtung 45 einläuft, der Teilstapel 31 über den annähernd elliptischen, nicht kreisrunden Formstempel 68 in eine gekrümmte Bewegungsbahn 69 gezwungen wird. Die dabei erzeugte Krümmung wird nochmals verstärkt, indem der Formstempel 68 in dieser Position zusätzlich durch einen Stift 70 in Richtung des Teilstapels 31 verformt wird. Hierdurch kann eine Biegung der Werkstoffbahnen 3,22,27 erzeugt werden, die in diesem Zustand auch eine Verschiebung dieser Werkstoffbahnen 3, 22, 27 relativ zueinander bewirkt. Trennt man nun die Separatoren 29 in dieser Position mit dem an der Oberwalze 5 angeordneten Separatormesser 50, so erhält man einen Separator 29, der länger ist als die darunterliegende Anode 7 bzw. Kathode 23. Anschließend können die Ableiterschnitte 16 mit den nachfolgenden Ableitermessern 51 ausgeführt werden, wobei der Teilstapel 31 bei dieser Drehposition der Oberwalze 5 und der Unterwalze 4 keine Krümmung erfährt, da in dieser nachfolgenden Drehstellung der Formstempel 68 nicht am Teilstapel 31 anliegt. Das bedeutet, dass die Ableiterschnitte 16 mit den Ableitermessern 51 an einem geraden und gestreckten Teilstapel 31 ausgeführt werden.

Mit der vorliegenden Erfindung ist es möglich vier Arbeitsschritte in einer Anlage ausführen zu können. Diese Arbeitsschritte umfassen das Längsschneiden, das Querschneiden, das Stapeln und das Verkleben bzw. Tapen von Zellstapeln.
Zudem können sehr hohe Stapelgeschwindigkeiten realisiert werden, wobei die vorzugsweise vier Werkstoffbahnen durchgehend von einer Spannvorrichtung 32, 33, 37 bzw. von einem Greifmittel 53 fixiert sind, wodurch eine sehr hohe Positions- und Fertigungsgenauigkeit erreicht werden kann.
Die Werkstoffbahnen müssen auch nicht zuerst vereinzelt und dann wieder zusammengefügt werden, wodurch ein nur sehr geringes Materialhandling erforderlich ist und eine sehr gute Materialausnutzung gegenüber beispielsweise einer Z-Faltung erreicht wird.
Aufgrund der hohen Positionsgenauigkeit kann auch das für den Separator 29 erforderliche Übermaß von beispielsweise 6 mm gegenüber der Kathode 23 sicher gewährleistet werden.

Schließlich kann auch auf sonst gebräuchliche Laminationsprozesse verzichtet werden, wodurch der Einsatz teurer laminationsfähiger Separatoren 29 entfallen kann.

**Bezugszeichenliste**

| | | | |
|---|---|---|---|
| 1 | erste Schneidvorrichtung | 27 | dritte Werkstoffbahn |
| 2 | erste Vorratseinrichtung | 28 | dritte Vorratseinrichtung |
| 3 | erste Werkstoffbahn | 29 | Separator |
| 3a, 3b | geteilte erste Werkstoffbahn | 30 | Führungsmittel |
| 4 | Unterwalze | 31 | Teilstapels |
| 5 | Oberwalze | 32 | erste Spannvorrichtung |
| 6 | Locheinheit | 33 | zweite Spannvorrichtung |
| 7 | Anode | 34 | Transportstift |
| 8 | Batteriezelle | 35 | Aufnahmestift |
| 9 | Anodenbereich | 36 | Nockenantrieb |
| 10 | Rand | 37 | dritte Spannvorrichtung |
| 11 | Rotationmesser | 38 | Überwachungsvorrichtung |
| 12 | Längsschnitt | 39 | Greifer |
| 13 | Aufnahmelöcher | 40 | Nockenrad |
| 14 | Trennschnitt | 41 | Ausnehmung |
| 15 | Fensterschnitt | 42 | Kurvenbahn |
| 16 | Ableiterschnitt | 43 | Platte |
| 17 | Transportloch | 44 | Feder |
| 18 | Transportabschnitt | 45 | zweite Schneidvorrichtung |
| 19 | Fenster | 46 | erste Rolle |
| 20 | Längsrichtung | 47 | zweite Rolle |
| 21 | Breite | 48 | Gegenrolle |
| 22 | zweite Werkstoffbahn | 49 | Streifen |
| 22a, 22b | geteilte zweite Werkstoffbahn | 50 | Separatormesser |
| 23 | Kathode | 51 | Ableitermesser |
| 24 | Kathodenbereich | 52 | Förderband |
| 25 | Ableiter | 53 | Greifmittel |
| 26 | Zweiter Vorratseinrichtung | 54 | Magazin |
| 55 | Spannelement | 64 | Stirnseite |
| 56 | Zweites Förderband | 65 | Klebezieher |
| 57 | Zellstapel | 66 | Klebebandrolle |
| 58 | Aufnahme | 67 | Messer |
| 59 | Zuführvorrichtung | 68 | Formstempel |
| 60 | Zellpaket | 69 | Bewegungsbahn |
| 61 | Transportband | 70 | Stift |
| 62 | Schieber | 71 | Boden |
| 63 | Klebeband | | |

## Patentansprüche

1. Verfahren zur Herstellung eines Zellstapels (57) für Batteriezellen (8), das wenigsten die folgenden Schritte aufweist:
a) Zuführen wenigstens einer ersten Werkstoffbahn (3), bestehend aus einem ersten Werkstoff;
b) Ausführen eines ersten Zuschnitts an wenigstens der ersten Werkstoffbahn (3) unter Ausbildung wenigstens eines zugfesten Transportabschnitts (18);
c) Zusammenführen der ersten Werkstoffbahn (3) mit wenigstens einer zweiten Werkstoffbahn (22), bestehend aus einem zweiten Werkstoff, zu einem Teilstapel (31);
d) Ausführen eines zweiten Zuschnitts des Teilstapels (31), wobei der Transportabschnitt (18) aufgetrennt wird;
e) Anordnen von wenigstens zwei Teilstapeln (31) zu einem Zellstapel (57).

2. Verfahren nach dem vorhergehenden Anspruch, wobei die erste Werkstoffbahn (3) und die zweite Werkstoffbahn (22) auf unterschiedliche Abmessungen zugeschnitten werden.

3. Verfahren nach einem der vorhergehenden Ansprüche, wobei beim Zuschnitt ein Transporteingriffsmittel (13, 17) oder ein Fensterabschnitt (19) in der Werkstoffbahn (3, 22, 27), insbesondere im Transportabschnitt (18), geschaffen wird.

4. Verfahren nach einem der vorhergehenden Ansprüche, wobei die Teilstapel (31) aus wenigstens vier Werkstoffbahnen (3, 27, 22, 27) gebildet werden.

5. Verfahren nach einem der vorhergehenden Ansprüche, wobei beim Zuschnitt an wenigstens zwei Werkstoffbahnen (3, 22) Ableiter (25) ausgebildet werden.

6. Verfahren nach einem der vorhergehenden Ansprüche, wobei der Zellstapel (57) mit einem Verbindungsmittel (63) zu einem Zellpaket (60) verbunden wird.

7. Verfahren nach einem der vorhergehenden Ansprüche, wobei beim Anordnen der Teilpakete (31) zum Zellstapel (57) zumindest eine zusätzliche Werkstoffbahn (27) im Zellstapel (57) angeordnet wird.

8. Batteriezelle (8) mit einem Zellstapel (57), hergestellt nach einem der vorhergehenden Patentansprüche.

9. Kraftfahrzeug mit wenigstens einer Batteriezelle (8) nach dem vorhergehenden Patentanspruch.

10. Vorrichtung zur Herstellung eines Zellstapels (57) mit wenigstens zwei Vorratseinrichtungen (2, 26, 28) für wenigstens eine erste Werkstoffbahn (3) und eine zweite Werkstoffbahn (22), wenigstens einer ersten Schneidvorrichtung (1) und einer zweiten Schneidvorrichtung (45) zum Zuschneiden des Werkstoffs, einer Transportvorrichtung (32, 33) zur Förderung der Werkstoffbahnen (3, 22, 27), einer Einrichtung (30) zum Zusammenführen der Werkstoffbahnen (3, 22, 27), und einer Stapelvorrichtung (54), wobei
die erste Schneidvorrichtung (1) wenigstens einen zugfesten Transportabschnitt (18) an einer Werkstoffbahn (3, 22, 27) erzeugt,
die zweite Schneidvorrichtung (45) in einer Längsrichtung (20) hinter der Einrichtung (30) zum Zusammenführen der Werkstoffbahnen (3, 22, 27) angeordnet und dazu ausgebildet ist,
eine vollständige transversale Trennung der Werkstoffbahnen (3, 22, 27)zu erzeugen.

11. Vorrichtung nach dem vorhergehenden Anspruch, **dadurch gekennzeichnet, dass** die erste Schneidvorrichtung (1) zum parallelen Zuschnitt von wenigstens zwei Werkstoffbahnen (3, 22, 27) ausgebildet ist.

12. Vorrichtung nach einem der vorhergehenden Ansprüche, **dadurch gekennzeichnet, dass** die erste Schneidvorrichtung (1) dazu ausgebildet ist, wenigstens eine Werkstoffbahn (3, 22, 27) parallel zur Längsrichtung (20) in eine Mehrzahl von Werkstoffbahnen aufzutrennen.
